# FASCICULE DE BREVET EUROPEEN

(11) **EP 3 423 772 B1**
(45) Date de publication et mention de la délivrance du brevet: **06.05.2020**
(21) Numéro de dépôt: 17708488.6
(22) Date de dépôt: 02.03.2017
(51) Int. Cl.: F28D 20/00, F24S 60/30

(54) **RESERVOIR DE STOCKAGE DE CHALEUR A FONCTIONNEMENT OPTIMISE**
WÄRMESPEICHERTANK MIT OPTIMIERTEM BETRIEB
HEAT STORAGE TANK WITH OPTIMIZED OPERATION

(30) Priorité: 04.03.2016 FR 1651837
(43) Date de publication de la demande: 09.01.2019
(73) Titulaire: Commissariat à l'énergie atomique et aux énergies alternatives, 75015 Paris (FR)
(72) Inventeur: MOLINA, Sophie, 46140 Douelle (FR); BRUCH, Arnaud, 69560 Sainte Colombe (FR); COUTURIER, Raphaël, 38360 Sassenage (FR)
(74) Mandataire: Brevalex
(86) Numéro de dépôt international: PCT/EP2017/054873
(87) Numéro de publication internationale: WO 2017/149063

(56) Documents cités:
- WO-A1-2012/171436
- FR-A1- 2 990 501
- FR-A1- 2 990 502
- US-B2- 8 554 377

## Description

### DOMAINE TECHNIQUE ET ART ANTÉRIEUR

La présente invention se rapporte à un réservoir de stockage de chaleur selon la revendication 1 et d'un procédé de gestion d'une installation comportant au moins un tel réservoir.

De nombreux domaines et de nombreuses applications industrielles mettent en œuvre le stockage de chaleur. Le stockage de la chaleur permet la valorisation de la chaleur issue de processus industriels, la récupération d'énergie excédentaire ou le découplage entre le moment de production d'énergie thermique et son utilisation.

A titre d'exemple, dans le domaine du solaire thermique à concentration (CSP pour "Concentrated Solar Power" en terminologie anglo-saxonne), l'excédent de chaleur produit aux heures à fort ensoleillement peut ainsi être stocké pour être exploité en fin de journée.

Le stockage de la chaleur peut être typiquement réalisé soit sous forme d'énergie sensible (en faisant varier le niveau de température d'un matériau de stockage solide ou liquide), sous forme d'énergie latente (en faisant changer de phase un matériau de stockage) ou enfin sous forme d'énergie chimique (en utilisant des réactions chimiques endothermiques et exothermiques).

Dans le cas d'un stockage de chaleur par chaleur sensible, la chaleur est stockée par élévation de la température d'un matériau de stockage qui peut être liquide, solide ou une combinaison des deux.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Le maintien de ces deux niveaux de température le plus constants possibles est recherché afin d'obtenir un fonctionnement optimisé du cycle. En effet, à titre d'exemple, les turbines à vapeur qui assurent la conversion de l'énergie thermique en énergie électrique ont un rendement plus élevé lorsque la température d'entrée dans la turbine est maintenue constante à une valeur prédéfinie. Par conséquent, le stockage associé à de tels systèmes doit donc respecter ces caractéristiques et permettre par exemple de déstocker de la chaleur à un niveau de température constant.

Un exemple de ce type de fonctionnement est le domaine du solaire thermique à concentration où un système de stockage typique est constitué de deux réservoirs remplis de fluide de stockage à deux niveaux de température. Un des réservoirs stocke à une température basse constante et le second réservoir de stockage à une température haute constante. La température de sortie du réservoir chaud est donc constante tout au long du déstockage.

Il existe également des systèmes ne comportant qu'un seul réservoir contenant à la fois le fluide chaud et le fluide froid. Il existe alors une stratification thermique au sein du réservoir, le fluide chaud situé en partie supérieure et le fluide froid situé en partie inférieure sont alors séparés par une région de transition appelée « thermocline ».

L'utilisation d'un réservoir unique permet de réduire le nombre de composants, tels que les pompes, vannes etc. et de simplifier le contrôle commande.

Dans un stockage de type thermocline, le matériau de stockage peut être un liquide caloporteur ou, avantageusement, un mélange d'un fluide caloporteur et d'un matériau solide bon marché. L'utilisation d'un tel matériau solide permet de plus d'améliorer la ségrégation du fluide chaud et du fluide froid en diminuant les effets de remélange. Dans ce dernier cas, on parle alors de « thermocline dual » (ou « mixed-media thermocline »).

Ce réservoir "thermocline dual" présente l'avantage de réduire la quantité de liquide nécessaire, sachant que les matériaux solides type roches sont bon marché, le coût total est réduit.

Dans un réservoir thermocline, afin de tenir compte des différences de masse volumique et éviter des mouvements de convection naturelle, le fluide caloporteur est introduit par le haut du réservoir lors de phases de stockage et par le bas du réservoir lors des phases de déstockage. Le stockage est donc caractérisé par une zone chaude en haut de la cuve, une zone froide en bas et une zone de transition entre les deux zones appelée thermocline. Le principe de ce type de stockage de chaleur est de créer un « piston thermique », c'est-à-dire l'avancée d'un front thermique le plus mince possible et uniforme transversalement. Ceci permet de maintenir des températures constantes lors des phases de charge et de décharge.

Lors des phases de charge, le liquide froid est retiré du réservoir par le bas et est échauffé, par exemple en traversant un échangeur thermique d'un collecteur solaire, et ensuite renvoyé dans le réservoir par le haut. Lors d'une phase de décharge, le liquide chaud est retiré du réservoir par le haut, et est envoyé par exemple vers l'évaporateur d'un cycle thermodynamique intégrant une turbine, dans lequel il est refroidi et est ensuite renvoyé dans le réservoir par le bas. Lors des phases de charge et de décharge le piston thermique se déplace vers le bas et vers le haut respectivement.

Le stockage de type "thermocline dual" basé sur un mélange de fluide caloporteur liquide et de matrice solide met en jeu des vitesses de fluides très faibles de l'ordre de quelques mm/s afin d'assurer le transfert de chaleur entre le fluide et la charge statique et de limiter les inhomogénéités.

Le document FR2990502 décrit un réservoir de stockage thermique de type « thermocline dual » comportant une matrice solide et un caloporteur liquide répartis dans plusieurs étages en communication fluidique, chaque étage comportant une couche de matrice solide, les couches de matrice solide de deux étages consécutifs étant séparées par une couche de caloporteur liquide dans laquelle apparaissent des mouvements de convection naturelle en cas d'inhomogénéité de température dans un plan transversal. Ces mouvements de convection naturelle assurent une homogénéisation de la température, ce qui permet de rétablir une homogénéité de température transversal dans les lits de matrice solide.

Si ce réservoir permet de se rapprocher du fonctionnement de type piston thermique, un épaississement de la zone de thermocline apparaît néanmoins.

Une température de fluide constante en phase de décharge ne peut donc être assurée durant toute la phase de décharge. Il en résulte un contrôle dégradé de la température en sortie du réservoir. Un tel contrôle dégradé s'accompagne d'une dégradation des performances des systèmes utilisant le fluide chaud, tel qu'une turbine d'une centrale électrique qui requiert une température d'entrée la plus stable possible.

En outre, par exemple dans le cas d'un réservoir de stockage thermique mis en œuvre dans une centrale solaire, celui-ci est généralement dimensionné sur les performances à l'équinoxe. Ainsi, le stockage est sous-dimensionné pour les journées à fort ensoleillement d'été, ce qui entraîne généralement une défocalisation des miroirs et donc une perte d'énergie, et surdimensionné pour les journées d'hiver, à faible ensoleillement. Il n'est pas possible de changer le réservoir d'une saison sur l'autre. Le stockage thermique n'est donc pas optimisé. Un problème de flexibilité dans l'utilisation du réservoir de stockage thermique se pose.

Le document US8554377 décrit dans un mode de réalisation un réservoir de type thermocline dual comportant plusieurs vannes d'extraction du liquide réparties sur la hauteur du réservoir et un échangeur thermique, le fluide extrait est réchauffé en traversant un échangeur thermique puis est réinjecté dans le réservoir en haut du réservoir. Cette circulation de fluide a pour objectif d'améliorer la gestion du réservoir. L'extraction à plusieurs niveaux dans le lit de roches apparaît comme complexe à réaliser, notamment du fait des cyclages thermiques auquel est soumis le lit de roche. Le document WO 2012/171436 décrit un réservoir de stockage de chaleur selon le préambule de la revendication 1.

### EXPOSÉ DE L'INVENTION

C'est par conséquent un but de la présente invention d'offrir un réservoir de stockage thermique de type "thermocline dual" à fonctionnement amélioré.

C'est également un but de la présente invention d'offrir un réservoir de stockage thermique offrant une plus grande flexibilité dans son fonctionnement.

Le but de la présente invention est atteint par un réservoir de stockage thermique comportant une matrice solide et un caloporteur liquide répartis dans plusieurs étages en communication fluidique, chaque étage comportant une couche de matrice solide, les couches de matrice solide de deux étages consécutifs étant séparées par une couche de liquide. Le réservoir comporte également un distributeur de liquide dans le fond inférieur du réservoir, un distributeur de liquide dans le fond supérieur du réservoir, un distributeur de liquide orienté vers le haut et un distributeur de liquide orienté vers le bas disposés au moins en partie dans au moins une couche de liquide entre deux étages

Grâce à l'invention, il est possible d'injecter du liquide dans le réservoir à différentes hauteurs du réservoir, le choix de la hauteur d'injection peut être fait sur la base de la température du fluide à injecter et de la répartition des températures dans le réservoir. En effet le réservoir peut être tel qu'il comporte plusieurs zones d'injection de fluide chaud à des températures différentes et un piston thermique associé à chaque zone d'injection.

Par ailleurs la mise en œuvre de plusieurs distributeurs sur la hauteur du réservoir permet d'utiliser tout ou partie du réservoir en fonction des besoins de stockage, par exemple dans le cas d'une centrale solaire, les besoins de stockage sont en général plus importants en été qu'en hiver. L'invention offre une grande flexibilité d'utilisation sans modification du réservoir.

En d'autres termes, on réalise un réservoir de stockage thermique comportant plusieurs points de charge et de décharge répartis sur sa hauteur, ce qui permet d'optimiser le fonctionnement et l'efficacité du réservoir, tant d'un point de vue du stockage, que du point de vue de l'exploitation de la chaleur stockée.

De manière très avantageuse, le réservoir selon l'invention est particulièrement adapté pour une exploitation multitherme, i.e. une utilisation de la chaleur stockée pour alimenter plusieurs systèmes consommateurs simultanément, chacun fonctionnant dans une gamme de température donnée distincte de la gamme de température des autres systèmes.

La présente invention a alors pour objet un réservoir de stockage de chaleur selon la revendication 1.

Le réservoir comporte avantageusement n lits d'élément solides séparés par n-1 couches liquide, n étant un entier positif supérieur à 1, et au plus n-1 premiers moyens de collecte et de distribution intermédiaire et au plus n-1 deuxièmes moyens de collecte et de distribution intermédiaire.

De préférence, n est égal au moins à quatre et de préférence égal à 6 et chaque couche de liquide comporte un premier moyen de collecte et de distribution intermédiaire et un deuxième moyen de collecte et de distribution intermédiaire.

Le réservoir peut comporter des capteurs de mesure de la température du fluide dans tout ou partie des couches liquides.

Les éléments solides de stockage thermiques présentent avantageusement au moins deux granulométries différentes. La couche de liquide caloporteur peut avoir une épaisseur comprise entre 1 cm et 10 cm.

De préférence, l'enveloppe est une virole et la hauteur de chaque lit inférieure au diamètre de l'enveloppe.

La présente invention a également pour objet une installation selon la revendication 6.

Les moyens de connexion commandables comportent de préférence des électrovannes et l'installation comportant une unité de contrôle desdites électrovannes.

L'unité de commande est avantageusement programmée pour contrôler les moyens de connexion en fonction des températures de fonctionnement des p systèmes d'utilisation et des températures des couches liquides.

L'unité de commande peut également être programmée pour contrôler les moyens de connexion de telle sorte que la charge du réservoir est assurée par le moyen supérieur de collecte et de distribution et l'un au moins des n-1 premiers moyens de collecte et de distribution intermédiaires et l'alimentation d'au moins un système utilisateur est assurée par le moyen inférieur de collecte et de distribution et l'un au moins des n-1 deuxième moyen de collecte et de distribution intermédiaire situé en-dessous du premier moyen de collecte et de distribution commandé par l'unité de commande.

L'unité de commande peut également être programmée pour contrôler les moyens de connexion de sorte à alimenter simultanément plusieurs systèmes utilisateurs.

L'unité de commande peut être programmée pour contrôler au moins les moyens de connexion d'un premier moyen de collecte et de distribution intermédiaire et les moyens de connexion d'un deuxième moyen de collecte et de distribution intermédiaire situé directement au-dessus dudit premier moyen de collecte et de distribution et à réduire le volume de stockage actif du réservoir. Le réservoir peut comporter un fond supérieur bombé, le moyen supérieur de collecte et de distribution étant situé dans le fond bombé supérieur. Lorsqu'au moins un compartiment est isolé, l'unité de commande est programmée pour contrôler les moyens de connexion du moyen supérieur de collecte et de distribution.

Dans un exemple avantageux, le système de production du fluide chaud est un champ solaire et le ou les systèmes utilisateurs sont choisis au moins parmi un système de production d'électricité, un système de production d'eau chaude et un système de production de froid.

De manière préférée, lors d'une période d'ensoleillement moyen maximal, l'unité de commande peut être programmée pour contrôler les moyens de connexion de sorte qu'aucun compartiment ne soit isolé, en période d'ensoleillement moyen minimal plusieurs compartiments soient isolés, et en période d'ensoleillement moyen intermédiaire au moins un compartiment soit isolé.

Le champ solaire comporte avantageusement des récepteurs solaires de type Fresnel.

La présente invention a également pour objet un procédé de gestion d'une installation selon l'invention, selon la revendication 13.

Dans un mode de fonctionnement, le procédé de gestion peut également comporter les étapes :
- détection d'une demande de débit de fluide important,
- contrôle des moyens de connexion de sorte que le moyen supérieur de collecte et de distribution et au moins une partie des deuxièmes moyens de collecte et de distribution intermédiaires assurent la fourniture du fluide.

Dans un autre mode de fonctionnement, le procédé de gestion peut comporter en outre les étapes :
- connaissance des ensoleillements moyens des différentes périodes d'une année, par exemple des saisons,
- contrôle des moyens de connexion pour adapter le volume de fluide actif participant au stockage en fonction de l'ensoleillement moyen.

### BRÈVE DESCRIPTION DES DESSINS

La présente invention sera mieux comprise à l'aide de la description qui va suivre et des dessins en annexes sur lesquels :
- la figure 1 est une vue en coupe longitudinale d'un exemple de réalisation d'un réservoir de stockage de chaleur selon l'invention,
- la figure 2 est une vue de dessus d'un exemple de réalisation d'un distributeur pouvant être mis en œuvre dans le réservoir selon l'invention,
- la figure 3 est une représentation schématique d'une centrale solaire comportant un réservoir selon l'invention et deux systèmes distributeurs,
- la figure 4 est une représentation schématique d'un réservoir selon l'invention en phase de décharge permettant une décharge à haute vitesse et donc à haute puissance,
- les figures 5A à 5D représentent schématiquement un exemple d'un réservoir selon l'invention dans quatre états de fonctionnement, en automne, en hiver, au printemps et en été respectivement,
- la figure 6 représente graphiquement les profils d'ensoleillement direct normal mensuel moyen en W/m² pour quatre lieux I, II, III et IV en fonction du mois, 1 correspondant au mois de janvier,
- la figure 7 représente graphiquement les profils de température un jour d'hiver dans un réservoir dans l'état de fonctionnement de la figure 5D et dans un réservoir dans l'état de fonctionnement dont le volume correspond à environ un quart de celui de la figure 5D,
- la figure 8 représente graphiquement des profils de température en °C d'un volume de stockage avec et sans fond bombé pour un même jour d'hiver, la hauteur étant adimensionnée,
- la figure 9 est une représentation schématique d'une centrale solaire dite multitherme mettant en œuvre un réservoir de stockage thermique selon l'invention,
- la figure 10 est une représentation schématique d'un autre mode de fonctionnement d'une centrale solaire comportant un réservoir selon l'invention comportant deux compartiments, dans lequel le réservoir est d'une part chargé par un champ solaire et d'autre part alimente un système de production de froid.

### EXPOSÉ DÉTAILLÉ DE MODES DE RÉALISATION PARTICULIERS

Dans la description qui va suivre, les termes "étage" ou "compartiment" seront utilisés indistinctement.

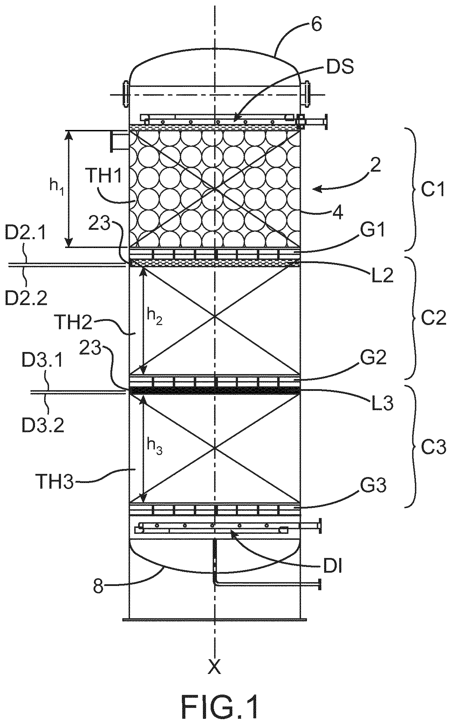

Les termes "inférieur", "supérieur", "haut" et "bas" sont considérés par rapport à l'orientation du réservoir sur la figure 1.

Sur la figure 1, on peut voir une vue en coupe longitudinale d'un exemple de réservoir de stockage de chaleur R selon l'invention.

Le réservoir comporte une enveloppe 2 cylindrique d'axe longitudinal X. Dans l'exemple représenté, le réservoir présente une section circulaire.

L'axe longitudinal X est destiné à être orienté sensiblement verticalement comme dans la représentation de la figure 1.

L'enveloppe 2 est formée d'une virole 4 et de deux fonds bombés 6, 8 fermant les extrémités longitudinales supérieure et inférieure respectivement de la virole 4. Une enveloppe comportant un ou deux fonds plats ne sort pas du cadre de la présente invention.

L'intérieur du réservoir est divisé en plusieurs compartiments C1, C2, C3 se superposant le long de l'axe longitudinal X. Chaque compartiment C1, C2, C3 comporte un fond G1, G2, G3 formant support assurant la retenue d'éléments de stockage thermiques solides tout en permettant la communication fluidique entre les compartiments et un lit TH1, TH2, TH3 d'éléments solides de stockage thermique. Seul le lit TH1 est représenté par des éléments solides.

En outre, une couche de liquide caloporteur L2, L3 est située au-dessus de chaque lit TH2, TH3, d'éléments de stockage thermiques solides respectivement.

Le volume utile du réservoir ne comporte pas de zone de vide, si bien que le volume non occupé par les éléments solides est rempli par le fluide caloporteur.

Dans l'exemple représenté, la zone située sous le lit TH3 délimité par le fond bombé inférieur 8 est rempli de liquide et d'un matériau solide, par exemple de type béton. Ceci permet de plus de diminuer la quantité de fluide caloporteur mise en œuvre.

Les éléments de stockage thermique sont formés par exemple par des roches et/ou du sable. De préférence, les éléments présentent au moins deux granulométries assurant ainsi un bon remplissage et réduisant les espaces libres pour le liquide caloporteur. Avantageusement, les éléments de stockage thermique solides sont formés par des blocs de roches et du sable, le sable remplissant les espaces entre les blocs de roches.

De préférence, un facteur 10 entre les médianes des deux granulométries est choisi ce qui permet le remplissage de l'espace libre entre les grosses roches par les petites roches. Par exemple, les grosses roches ont un diamètre d'environ 3 cm et les petites roches ont un diamètre d'environ 3 mm. La répartition en volume est la suivante : environ 75% de grosses roches et 25% de petites roches en volume.

Il peut s'agir par exemple de roches alluvionnaires composées principalement de silice. Les roches sont choisies en fonction de leurs caractéristiques liées à la capacité de stockage thermique et à leur comportement thermique (masse volumique, capacité thermique massique et conductivité thermique) et à leur compatibilité avec le liquide caloporteur, par exemple la compatibilité entre la nature géologique de la roche et du liquide caloporteur.

Le liquide caloporteur est par exemple de l'huile ou des sels fondus. Par exemple, l'huile peut être du Therminol66 ® ou Jarytherm DBT ®, celles-ci ne montrant pas d'interactions particulières avec les roches alluvionnaires, de manière plus générale les huiles thermiques de synthèse haute température peuvent convenir en utilisation avec les roches alluvionnaires.

A des fins de simplicité les "lits d'éléments de stockage thermique solides" seront désignés par la suite "lit de stockage thermique".

Les supports sont donc adaptés pour supporter mécaniquement les lits de stockage thermique, pour retenir les éléments de faible granulométrie, tels que le sable et à laisser passer le liquide caloporteur.

Les supports sont par exemple formés par des grilles d'un seul tenant ou en plusieurs parties disposées sur des caillebotis.

Les grilles comportent par exemple une toile métallique dont la taille des mailles est telle qu'elle assure la retenue des éléments solides de plus faibles granulométries.

Chaque support G1, G2, G3 est par exemple suspendu dans la virole par l'intermédiaire d'un taquet annulaire bordant la surface intérieure de la virole à la hauteur souhaitée.

Le réservoir comporte également des moyens d'admission et de collecte du liquide dans le réservoir.

Les moyens d'admission et de collecte sont répartis le long de la direction longitudinale dans le réservoir.

A des fins de simplicité, chaque moyen d'admission et de collecte sera désigné par « distributeur » dans la suite de la description.

Dans l'exemple représenté, le réservoir comporte un distributeur supérieur DS situé dans le fond bombé supérieur 6 et un distributeur inférieur DI situé dans le fond bombé inférieur 8.

Des distributeurs intermédiaires D2.1, D2.2, D3.1, D3.2 sont disposés au niveau de chaque couche de liquide L2, L3. « disposé au niveau de la couche de liquide » signifie « disposé dans la couche de liquide ou juste au-dessus ou juste en-dessous de la couche de liquide partiellement ou complètement ».

Dans l'exemple représenté, dans chaque couche de liquide sont disposés un distributeur orienté vers le haut D2.1, D3.1, i.e. qui injecte du fluide au-dessus de lui dans la représentation de la figure 1, et un distributeur orienté vers la base D2.2, D3.2, i.e. qui injecte du fluide au-dessous de lui dans la représentation de la figure 1. Les distributeurs dans chaque couche de liquide peuvent être posés sur le lit de roches.

Dans chaque couche liquide, le distributeur D2.1, D3.1 orienté vers le haut est situé au-dessus du distributeur D2.2, D3.2 orienté vers le bas.

La disposition des distributeurs D2.1 à D3.2 dans les couches de liquide et non dans les lits de roches présente l'avantage d'éviter les risques de dégradation mécanique des distributeurs pouvant résulter de la différence de dilatation thermique entre les roches et les distributeurs et du tassement et des mouvements du lit de roches.

Néanmoins, il peut être envisagé que les distributeurs D2.1, D3.1 soient disposés sur les grilles dans les lits de roches et les distributeurs D2.2 et D3.2 soient disposés sous les grilles tout ou en partie dans les couches de liquide.

Chaque lit de roches, à l'exception des lit de roches les plus supérieurs et inférieurs, est dont entouré par un distributeur situé au-dessus du lit de roches et un distributeur situé au-dessous du lit de roches.

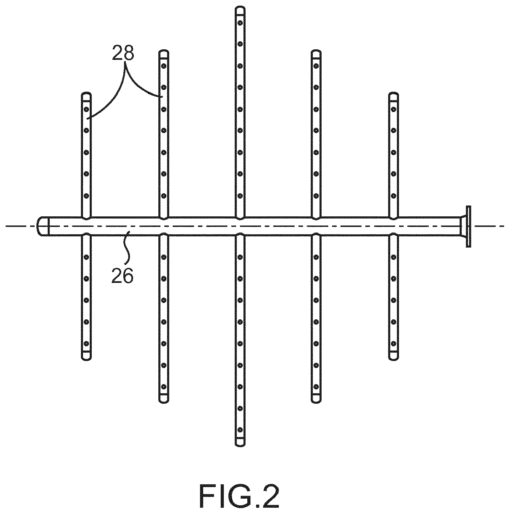

Sur la figure 2, on peut voir un exemple de réalisation avantageux de distributeur vu de dessus. Les distributeurs inférieur, supérieur et intermédiaires peuvent avoir la structure du distributeur de la figure 2.

Le distributeur de la figure 2 comporte un conduit d'alimentation 26 relié à l'alimentation en liquide extérieur et des conduits de distribution 28 connectés au conduit d'alimentation et s'étendant transversalement par rapport à celui-ci. Dans l'exemple représenté, les conduits de distribution 28 sont perpendiculaires au conduit d'alimentation 26. Chaque conduit est muni d'une pluralité d'orifices de distribution assurant une distribution du liquide le long de son axe.

Le conduit principal s'étend avantageusement le long d'un diamètre de la virole. De manière avantageuse également les conduits de distribution présentent des longueurs différentes en fonction de leur position le long du conduit principal de sorte que le distributeur couvre de manière sensiblement homogène toute la section transversale de la virole.

D'autres formes de distributeurs peuvent être envisagées, de préférence ces formes assurant une répartition homogène des liquides alimentant le réservoir.

Dans l'exemple représenté, chaque couche de liquide L2, L3 comporte une paire de distributeurs intermédiaires. Il pourrait être prévu qu'une partie seulement des couches de liquide comporte des paires de distributeurs.

En outre, le réservoir comporte dans l'exemple représenté trois compartiments et deux paires de distributeurs intermédiaires mais ceci n'est en aucun cas limitatif, il pourrait comporter plus ou moins de compartiments et plus ou moins de distributeurs intermédiaires. Le nombre de paires de distributeurs intermédiaires est choisi de sorte à permettre une meilleure gestion de la stratification thermique du réservoir et de sorte à rendre le fonctionnement du réservoir plus flexible, tout en tenant compte de la complexité du pilotage du stockage et du coût et de la difficulté de fabrication.

Par exemple, pour des tailles de réservoirs de stockage de quelques mètres de diamètre, typiquement de 5 à 20 m, et de quelques mètres m de haut, typiquement 5 à 15 m, quatre ou cinq paires de distributeurs intermédiaires peuvent être prévues.

De plus dans l'exemple représenté, les compartiments ont sensiblement la même hauteur et les paires de distributeurs sont distribuées régulièrement le long de la hauteur du réservoir. Il peut être prévu des compartiments de hauteurs différentes et/ou des paires de distributeurs réparties de manière non régulière le long du réservoir.

Des exemples de commandes des distributeurs du réservoir de la figure 1 particulièrement avantageux vont maintenant être décrits.

Les distributeurs inférieur, supérieur, et intermédiaire sont connectés fluidiquement à des sources de fluide chaud et froid et à des systèmes utilisateurs du fluide stocké dans le réservoir, au moyen de circuits fluidiques et de moyens de commande de la circulation du fluide entre les distributeurs et les sources de fluide chaude et froid. Ces moyens de contrôle sont par exemple des électrovannes commandées par une unité de commande type ordinateur, qui contrôle l'état des électrovannes suivant différents modes de fonctionnement du réservoir, qui dépendent de l'installation dans laquelle il est implanté. Ces modes de fonctionnement sont sous forme de programmes informatiques. Néanmoins des moyens de contrôle manuels sont envisageables.

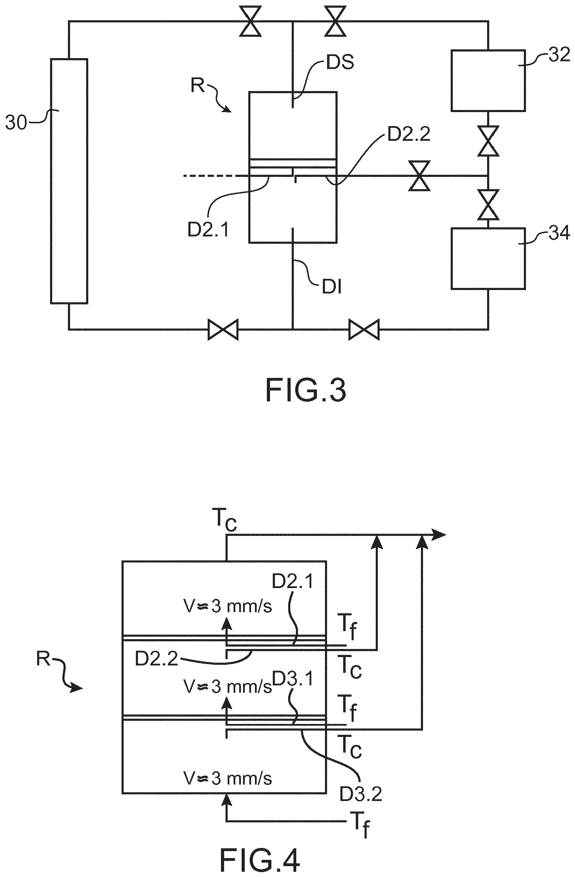

Sur la figure 3, on peut voir une représentation schématique d'un exemple d'une centrale solaire, par exemple de type Fresnel, comportant un champ solaire 30 dans lequel circule le fluide à échauffer, au moins un réservoir de stockage thermique selon l'invention comportant deux compartiments et deux distributeurs intermédiaires D2.1 et D2.2 et au moins deux systèmes 32, 34 utilisant le fluide échauffé par le champ solaire soit directement et/ou via le réservoir de stockage thermique, le système 32 est par exemple une turbine à vapeur et le système 34 est par exemple un système de production d'eau chaude.

Le réservoir peut présenter deux pistons thermiques suivant le mode de fonctionnement, l'un entre le distributeur DI et le distributeur D2.2 et l'autre entre le distributeur D2.1 et DS.

Grâce à la présente invention, l'installation de la figure 3 peut présenter plusieurs modes de fonctionnement :
En mode de charge, i.e. le champ solaire fournissant du fluide chaud au réservoir :
- Le réservoir R peut être utilisé suivant un fonctionnement « classique ». Dans ce cas, en phase de charge le champ solaire 30 alimente en fluide chaud le réservoir par le distributeur DS et le fluide froid est soutiré par le distributeur DI.
- Dans un autre mode de réalisation dans lequel les distributeurs D2.1 et D2.2 interviennent, en phase de charge, le fluide chaud provenant du champ solaire 30 est injecté dans le réservoir par le distributeur DS et le fluide froid est soutiré par le distributeur D2.1. En parallèle, le réservoir est alimenté en fluide froid par distributeur DI et du fluide chaud est soutiré par le distributeur D2.2 pour alimenter le consommateur 34. Grâce à l'invention, on peut simultanément réaliser une charge du réservoir depuis le champ solaire tout en réalisant une décharge pour n'alimenter que la machine 34.

En mode de décharge, i.e. le chambre solaire ne fournissant pas de fluide chaud, :
- le réservoir peut être utilisé dans le mode de fonctionnement classique suivant dans lequel le réservoir est alimenté en fluide froid par le distributeur DI et du fluide chaude est soutiré par le distributeur DS pour alimenter en série les consommateurs 32 et 34.
- le réservoir peut fonctionner selon un autre mode de réalisation, dans lequel on réalise une décharge spécifique pour le consommateur 32 ou pour le consommateur 34 à des moments différents suivant les besoins. Pour alimenter le consommateur 32, on soutire du fluide chaud par le distributeur DS et on injecte du fluide dans le réservoir par le distributeur D2.1. Pour alimenter le consommateur 34, le fluide est soutiré par le distributeur D2.2 et du fluide est injecté dans le réservoir par DI. Grâce à l'invention, on peut alors dissocier les décharges pour les différents consommateurs thermiques et par exemple on peut utiliser le consommateur 34 sans pour autant avoir besoin d'utiliser le consommateur 32.

Dans ce mode de fonctionnement, le réservoir délivre du fluide chaud soit à la turbine 32, soit au consommateur 34.

En outre avec un dispositif selon l'invention, il est possible de décharger du fluide avec des débits plus importants que ceux des réservoirs de l'état de la technique en limitant la déformation du front thermique.

En effet, comme cela est schématisé sur la figure 4, on peut prélever du liquide par les distributeurs D2.1, D3.1 simultanément, le débit au niveau de chaque distributeur étant inférieur au débit susceptible de générer des inhomogénéités transversales de température, des pertes de charge importantes et des problèmes d'inertie entre la matrice solide et le fluide caloporteur. Les vitesses de déplacement V du fluide souhaitées pour éviter de perturber le réservoir sont de quelques mm/s

Si on considère un réservoir entièrement chargé, i.e. que le tout le fluide dans le réservoir est à la température chaude Tc, tous les distributeurs sont dans un fluide à la température chaude. Dans l'exemple représenté, la température chaude Tc est 300°C et la température froide Tf est de 150°C. L'unité de contrôle détecte cet état. Si elle reçoit un ordre de délivrer un débit de fluide chaud important, elle peut commander les électrovannes pour qu'elles permettent de prélever le fluide chaud par le distributeur supérieur et par les distributeurs intermédiaires situés au-dessus de chaque lit de roches. Simultanément les distributeurs disposés sous les lits de roches injectent du fluide froid, ainsi que le distributeurs DI. Chaque distributeur peut prélever le fluide à une vitesse inférieure à une vitesse pouvant perturber le front thermique, par exemple 3 mm/s. les débits des différents distributeurs s'additionnent.

Dans l'exemple de la figure 4, trois prélèvements ont lieu simultanément ce qui correspond à une puissance extraite qui nécessiterait, sans l'invention, une vitesse de 9 mm/s en considérant la section transversale dans le réservoir de stockage. Simultanément du fluide froid est injecté dans le réservoir par le ou les distributeurs situés sous les lits de roches afin de conserver un volume constant

Ce type de commande peut également fonctionner dans le cas où le réservoir est partiellement chargé. Les prélèvements n'ont alors lieu que dans les étages se trouvant à la température visée par un besoin de fort débit. Dans ce cas, seuls les distributeurs situés directement sous les lits de roches au-dessus duquel le distributeur prélève du fluide injectent du fluide.

Le réservoir selon l'invention est apte à délivrer un débit de fluide plus important avec les mêmes conditions de température froide et de température chaude. Il permet donc d'extraire plus de puissance en limitant les perturbations du front thermique, i.e. sans dégrader l'échange entre la matrice solide et le fluide caloporteur et donc en limitant la dégradation des performances du réservoir.

Ce fonctionnement pour augmenter le débit perturbe l'état du réservoir mais cette perturbation peut être gérée et le fait de pouvoir répondre à un fort appel de puissance présente un avantage majeur.

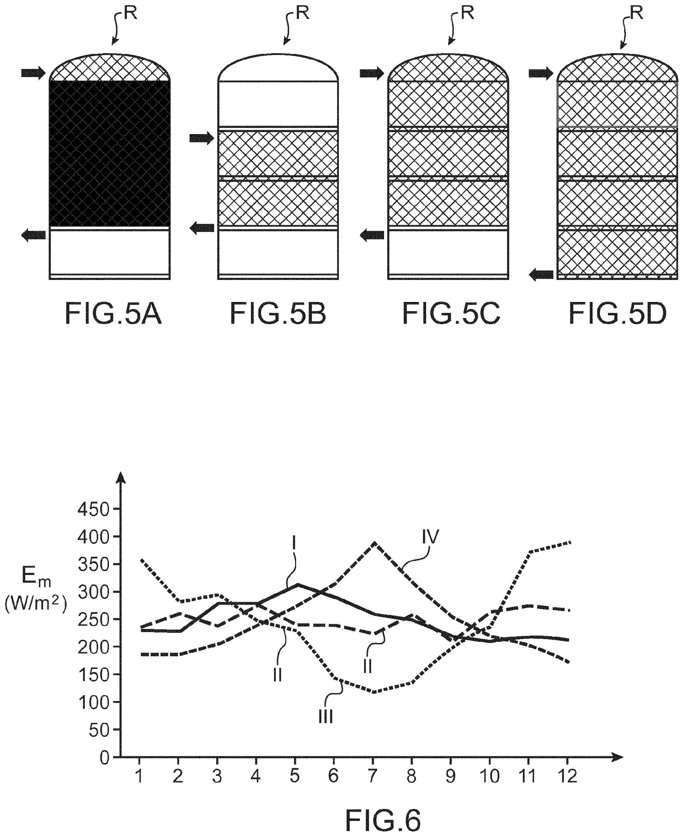

Sur les figures 5A à 5D, on peut voir un réservoir de stockage thermique R selon l'invention dans différents états de fonctionnement pendant les quatre saisons de l'année. Ces états ne sont donnés qu'à titre d'exemple et correspondent à une installation dans lequel les besoins de stockage en été sont supérieurs à ceux en hiver.
La figure 5A correspond au réservoir en automne.
La figure 5B correspond au réservoir en hiver.
La figure 5C correspond au réservoir au printemps.
La figure 5D correspond au réservoir en été.

Sur la figure 6, on peut voir les profils d'ensoleillement direct normal mensuel moyen Em en W/m² pour quatre lieux I, II, III et IV en fonction du mois, 1 correspondant au mois de janvier.

On constate une variation sensible de l'ensoleillement au cours de l'année. Par exemple, le lieu II présente peu de variations saisonnières entre l'hiver et l'été alors que les lieux III et IV présentent des variations sensibles entre l'hiver et l'été. Les besoins de stockage entre l'hiver et l'été sont donc sensiblement différents pour les lieux III et IV. Pour le lieu III, le besoin de stockage est supérieur en hiver à celui en été et inversement pour le lieu IV

Grâce à au réservoir selon l'invention, il est possible d'adapter la capacité de stockage du réservoir en fonction de la variation d'ensoleillement et ainsi rendre le stockage plus efficace.

On peut, lorsque les besoins en stockage, sont réduits, limiter le stockage dans un ou plusieurs des compartiments au lieu de stocker la chaleur dans tout le réservoir.

Les zones quadrillées sont celles utilisées pour le stockage.

Comme cela est représenté sur la figure 5D, en été, le stockage se fait sur toute la hauteur du réservoir pour avoir un volume de stockage maximal. En en hiver, on réduit le volume de stockage par exemple à deux compartiments comme cela est représenté sur la figure 5B. Au printemps (figure 5C) et en automne (figure 5A), on peut utiliser trois compartiments sur les quatre disponibles.

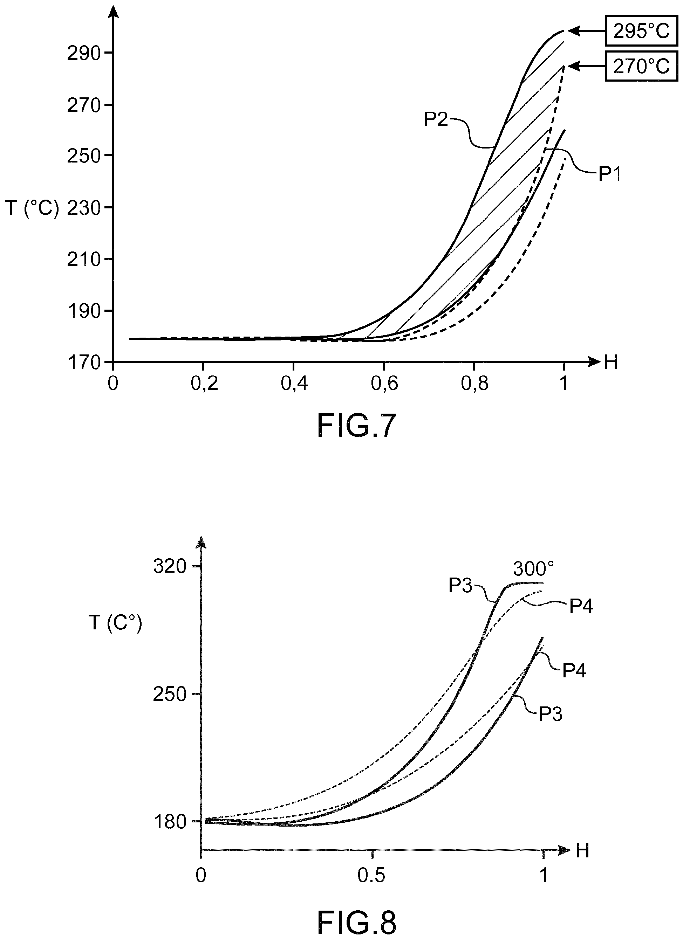

Sur la figure 7, on peut voir représentés les profils de température en °C d'un volume de stockage en fonction de la hauteur H de stockage en hiver. La hauteur est adimensionnée.

La courbe P1 correspond au profil de température en fin charge pour le même jour pour un volume de stockage correspondant à la figure 5D. La courbe P2 correspond au profil de température en fin de charge pour une journée donnée pour un volume de stockage correspondant à environ un quart de celui de la figure 5D. La température de charge est 300°C et de décharge de 180°C.

On constate que le front thermique est plus avancé pour le volume réduit (courbe P2) que pour le volume de la figure 5D. En outre la température en fin de charge en haut du volume de stockage dans le cas du volume réduit (P2) est de 295°C alors que celle en haut du volume de stockage complet (P1) qui correspond au volume total du réservoir est de 275°C.

La zone hachurée correspond au gain résultant de la réduction du volume de stockage.

Lors de la décharge du volume de stockage de la figure 5B, le fluide extrait est à une température plus élevée, ce qui permet d'envisager des rendements des consommateurs thermiques plus importants.

Cette modification du volume de stockage est réalisable très facilement en commandant les électrovannes associées à chacun des distributeurs.

En été, les connexions avec le circuit fluidique de tous les distributeurs intermédiaires sont interrompues, seules les distributeurs supérieur et inférieur sont utilisés, comme un réservoir de stockage à thermocline de l'état de la technique.

En hiver, le distributeur supérieur et le distributeur orienté vers le haut disposé au-dessus du deuxième compartiment sont connectés aux circuits fluidiques, les connexions des autres distributeurs avec le circuit fluidique sont interrompues.

Les modifications des connexions des distributeurs au circuit fluidique sont établies en fonction des variations d'ensoleillements moyens constatés. Les modifications des connexions peuvent être commandées automatiquement par l'unité de contrôle ou alors manuellement.

L'adaptation du volume de stockage en fonction de l'ensoleillement permet d'avoir une meilleure visibilité sur le fonctionnement du réservoir, notamment en hiver. En effet, en hiver dans le lieu IV, l'énergie apportée est proportionnellement faible par rapport au volume de stockage du réservoir entier. L'énergie injectée a donc peu d'impact sur le déplacement du piston thermique au sein de réservoir. Ce déplacement faible est difficilement détectable. Au contraire, en réduisant le volume du stockage, l'apport d'énergie est proportionnellement élevé, ce qui provoque un déplacement plus important du piston thermique, plus facilement détectable. Ce déplacement du front thermique est représenté sur la figure 7. La gestion de l'installation est donc facilitée. La détection de ce déplacement peut être réalisée au moyen de mesures de la température dans le réservoir. Comme on le voir sur la figure 7, dans le cas P1 on observe une avancée plus importante du front thermique que dans P2 : la mesure de T a permis de visualiser le front thermique et son déplacement.

De préférence, la réduction du volume de stockage du réservoir est obtenu en « supprimant » les compartiments inférieurs, i.e. en isolant le distributeur inférieur et le distributeur D3.2 pour le printemps et l'automne et en isolant le distributeur inférieure et les distributeurs D2.1, D2.2, D3.1 et D3.2 pour l'hiver. Ainsi on évite un remélange entre le fluide chaud injecté et un fluide froid par convection. En effet, lors d'une phase de charge, le fluide chaud est injecté dans la partie supérieure du volume de stockage. Si le compartiment supérieur était isolé pour réduire le volume de stockage, le fluide chaud injecté se mélangerait avec le fluide situé dans le compartiment supérieur qui ne participerait pas au stockage, l'efficacité du stockage serait donc réduite.

Néanmoins, dans le cas de réservoirs comportant un fond bombé supérieur comme dans les exemples représentés, on peut prévoir lors d'une réduction du volume d'isoler le compartiment supérieur, i.e. de déconnecter le distributeur supérieur et le distributeur D2.1 afin que l'injection de fluide chaude ait lieu non pas entre le fond bombé et le lit de roche supérieur TH1 mais entre le lit de roche TH2 et le lit de roche TH1, le fluide chaud entrant alors directement au niveau de la matrice solide (figure 5B). La dégradation des profils de température est alors limitée. Le fond bombé correspond à un volume supplémentaire qui n'est pas rempli de matrice solide, mais uniquement de fluide caloporteur, et donc plus sensible que le reste du volume du réservoir au remélange par convection naturelle, phénomène qui dégrade les performances du stockage. En injectant directement dans le lit de roches on réduit ce phénomène de remélange.

De manière avantageuse en hiver, on isole le compartiment TH4 et le compartiment TH1, le stockage ayant lieu dans les compartiments TH2 et TH3 uniquement comme cela est schématisé sur la figure 5B.

Sur la figure 8, on peut voir les profils de température un jour d'hiver dans le cas d'un volume de stockage tel que celui de la figure 5B (courbe P3) dans lequel l'injection se fait entre deux compartiments et non au niveau du fond supérieur, et dans le cas d'un volume de stockage à deux compartiments dans lequel l'injection se fait au niveau du fond bombé (courbe P4). On constate sur la courbe P3 que le palier haute température n'est pas dégradé, la température en fin de charge en haut du volume de stockage est égale à 300°C qui est la température de charge. Dans la configuration de stockage de la figure 8, l'épaississement du gradient thermique est limité et les performances du stockage sont améliorées. La figure 8 montre donc l'intérêt qu'il peut y avoir un jour d'hiver, dans le cas où il y a peu de puissance thermique à stocker, à stocker entre 2 niveaux internes du réservoir plutôt que de passer par le fond bombé supérieur.

De plus en isolant une partie du réservoir de stockage, une partie du fluide ne circule pas et est laissé « au repos », cette partie du fluide ne risque alors pas d'être dégradée en étant surchauffée par exemple en circulant dans les récepteurs solaires.

La sécurité et la durée de vie de l'installation sont augmentées. En outre, les coûts liés à l'entretien de l'installation et au remplacement du fluide sont réduits.

Comme cela a été expliqué plus haut, les réservoirs de l'état de la technique sont généralement dimensionnés sur l'équinoxe, ils ne sont alors optimisés ni pour un fonctionnement en hiver, ni pour un fonctionnement en plein été. Grâce à l'invention, le réservoir peut être dimensionné pour que son volume de stockage maximal assure un fonctionnement optimal en plein été, i.e. lorsque l'ensoleillement est maximal, le volume de stockage peut ensuite être adapté pour optimiser le stockage lorsque l'ensoleillement est réduit. Ainsi en plein été, les miroirs n'ont plus besoin d'être défocalisés pour réduire l'énergie transmise au réservoir. Une quantité maximale de chaleur peut être stockée.

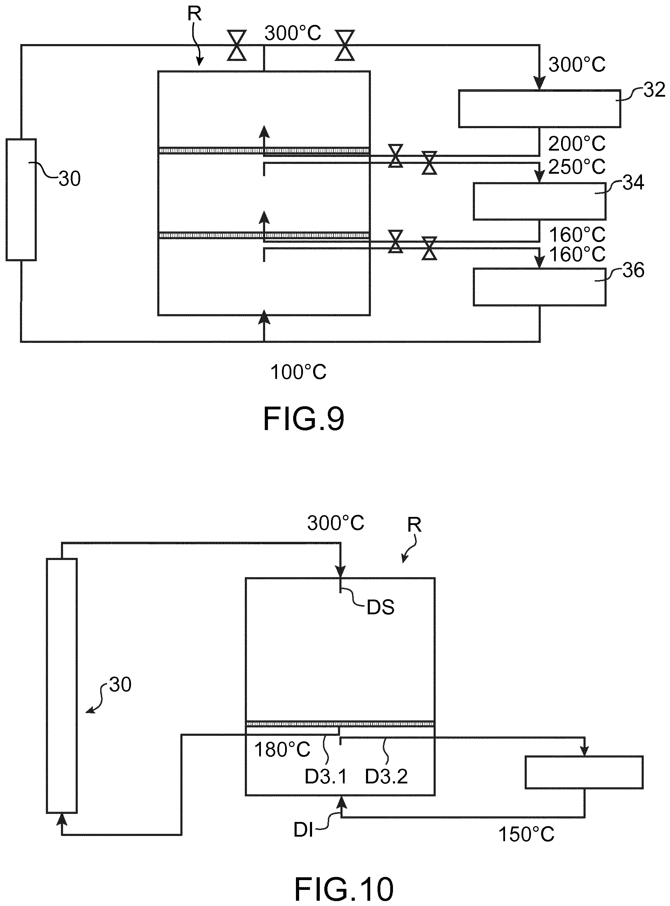

Sur la figure 9, on peut voir un exemple de centrale solaire dite multitherme mettant en œuvre un réservoir de stockage thermique selon l'invention.

La centrale solaire comporte un champ solaire 30, un réservoir R selon l'invention et plusieurs consommateurs ou utilisateurs de l'énergie thermique collectée par le champ solaire, l'énergie thermique est envoyée directement aux consommateurs et/ou est envoyé après stockage dans le réservoir. Le réservoir comporte trois compartiments.

Les consommateurs sont désignés 32, 34 et 36. La référence 32 désigne par exemple un système de production d'électricité tel qu'une turbine à vapeur, la référence 34 désigne par exemple un système de production d'eau chaude et la référence 36 désigne par exemple un système de production de froid.

Les différents consommateurs sont connectés en parallèle au réservoir de stockage. Chaque consommateur est alimenté par un distributeur qui est situé dans la couche de liquide dont le niveau de température correspond à celui requis pour le fonctionnement du consommateur. Le fluide sortant de chaque consommateur est réinjecté dans le réservoir dans le distributeur situé directement en-dessous du distributeur alimentant le consommateur.

Il sera compris que chaque consommateur peut en fait comporter plusieurs consommateurs connectés en série.

Par exemple, le système de production d'électricité est alimenté en fluide à 300°C par le distributeur supérieur car c'est celui qui requiert en générale la température la plus élevée, le fluide est réinjecté dans le réservoir par exemple à une température de 200°C. Le système de production d'eau chaude est alimenté par un distributeur intermédiaire avec du fluide à 250°C et le fluide est réinjecté dans le réservoir à une température de 160°C. Le système de production de froid est alimenté en fluide à 160°C-170°C et le fluide sortant du système de production de froid est réinjecté dans le réservoir de stockage par le distributeur inférieur à une température de 100°C. Tous les consommateurs peuvent être alimentés simultanément indépendamment de la température de sortie du fluide de chaque consommateur. A l'inverse, dans les centrales solaires de l'état de la technique, les consommateurs sont connectés en série. Le système de production d'électricité est alors alimenté en premier avec la température la plus élevée et les autres consommateurs « récupèrent » la chaleur restante. Si la température de sortie est trop basse pour la production d'électricité mais néanmoins suffisante pour le consommateur suivant dans la connexion série, c'est lui qui est alimenté directement.

Comme cela est illustré par l'exemple ci-dessus, il est envisageable d'injecter un fluide dans le réservoir par un distributeur intermédiaire à une température inférieure à la température à laquelle le fluide est prélevé par le distributeur intermédiaire situé en dessous.

Sur la figure 10, on peut voir illustrer un autre mode de fonctionnement d'une centrale solaire comportant un réservoir selon l'invention comportant deux compartiments, dans lequel le réservoir est d'une part chargé par le champ solaire 30 et d'autre part alimente par exemple le système de production de froid, tel qu'une machine à absorption.

Le réservoir comporte un distributeur supérieur, un distributeur inférieur, un distributeur intermédiaire orienté vers le haut et un distributeur intermédiaire orienté vers le bas. Ce réservoir peut être réalisé par le réservoir de la figure 1 en commutant les vannes ou électrovannes de manière adaptée.

En considérant le réservoir de la figure 1, le distributeur supérieur DS est connecté à la sortie du champ solaire et charge le réservoir, le distributeur intermédiaire D3.1 orienté vers le haut est connecté à l'entrée du champ solaire. Le distributeur intermédiaire orienté vers le bas D3.2 est connecté au système de production de froid et le distributeur inférieur DI est connecté à la sortie du système de production de froid.

D'autres configurations sont envisageables, on peut par exemple simultanément alimenter deux consommateurs et charger le réservoir.

Le réservoir selon l'invention permet donc une grande flexibilité et adaptabilité et permet différents modes de fonctionnement d'une centrale solaire.

Un exemple de procédé de fabrication d'un réservoir selon l'invention va maintenant être décrit.

La matrice solide mise en œuvre dans le réservoir comporte de préférence un mélange de deux granulométries, par exemple il comporte des roches de quelques cm de taille caractéristique et du sable de quelques mm de diamètre. Le remplissage des différents compartiments avec la matrice solide se fait par exemple selon le procédé décrit dans le document FR2990501.

Par exemple, dans chaque compartiment on réalise une couche de roches d'une hauteur d'environ 13 cm-14 cm, cette couche présente par exemple une porosité de 0,4. Ensuite le sable est versé sur la couche de roches et s'écoule entre les roches L'ajout de sable cesse lorsque les grains affleurent à la surface du lit de roches. De préférence, la hauteur du lit de roche d'un compartiment peut atteindre plusieurs mètres, les étapes élémentaires ci-dessus sont donc répétées plusieurs fois pour remplir entièrement un compartiment

De préférence, le sable est séché avant sa mise en place facilitant son écoulement entre les roches.

La réalisation du réservoir peut se faire selon les étapes suivantes :
a) Mise en place du distributeur inférieur dans le fond bombé bas ;
b) Mise en place d'une grille de fixation, en laissant un espace libre en-dessous, qui sera ensuite rempli par du fluide caloporteur ;
c) Mise en place de la matrice solide selon la méthode décrite ci-dessus en répétant les étapes élémentaires pour atteindre la hauteur de lit de roches souhaitée, par exemple, de l'ordre de 2 m ;
d) Mise en place d'un premier distributeur intermédiaire orienté vers le bas. Il repose par exemple sur la matrice solide ;
e) Mise en place d'un deuxième distributeur intermédiaire au-dessus du premier distributeur. Les trous du deuxième distributeur sont orientés vers le haut du réservoir de stockage ;

Les étapes b), c), d) et e) sont répétées jusqu'à atteindre le nombre de compartiments souhaités.
f) Mise en place du distributeur supérieur ;
g) Mise en place du fond bombé supérieur.

Les lits de roches peuvent avoir des hauteurs différentes les uns des autres.

La virole est par exemple construite au fur et à mesure en empilant des portions tubulaires.

On pourrait prévoir que les deux distributeurs intermédiaires disposés au-dessus de chaque lit de roches soient d'un seul tenant, chaque distributeur intermédiaire comportant néanmoins son propre canal fluidique.

Le réservoir de stockage selon l'invention peut être utilisé comme réservoir de stockage dans tout type d'installation requérant un stockage et/ou une alimentation en fluide chaud à températures maîtrisées et constantes, par exemple dans une centrale solaire, par exemple de type Fresnel, ou dans une centrale solaire à tour. Il peut également être utilisé dans des installations industrielles produisant des fluides chauds que l'on peut souhaiter stocker en vue d'une utilisation ultérieure et/ou utilisant des fluides chauds

Il peut être utilisé dans un grand nombre d'installations car il offre une plage étendue de fonctionnement.

## Revendications

1. Réservoir de stockage de chaleur comportant une enveloppe (2) d'axe longitudinal (X), l'axe longitudinal étant destiné à être orienté sensiblement verticalement, ladite enveloppe étant remplie d'un liquide caloporteur et d'éléments solides de stockage thermique, une extrémité longitudinale supérieure munie d'un moyen supérieur de collecte et d'alimentation (DS) en un liquide à une première température et une deuxième extrémité longitudinale inférieure munie d'un moyen inférieur de collecte et d'alimentation (DI) en un liquide à une deuxième température, lesdits éléments solides de stockage thermique étant répartis en au moins deux lits (TH1, TH2, TH3) superposés le long de l'axe longitudinal (X), séparés par une couche de liquide (L1, L2, L3), le liquide étant apte à circuler entre l'extrémité longitudinale supérieure et l'extrémité longitudinale inférieure **caractérisé en ce qu'**il comporte au moins un premier moyen de collecte et de distribution intermédiaire disposé dans la couche liquide et au moins un deuxième moyen de collecte et de distribution intermédiaire disposé dans la couche de liquide ou juste au-dessus ou juste en-dessous de la couche de liquide partiellement ou complètement, **en ce que** le premier moyen de collecte et de distribution intermédiaire est orienté de sorte à collecter et distribuer le fluide dans le lit d'éléments solides situé en-dessus du premier moyen de collecte et de distribution intermédiaire et **en ce que** le deuxième moyen de collecte et de distribution intermédiaire est orienté de sorte à collecter et distribuer le fluide dans le lit d'éléments solides situé en-dessous du deuxième moyen de collecte et de distribution intermédiaire.

2. Réservoir selon la revendication 1, comportant n lits d'élément solides séparés par n-1 couches liquide, n étant un entier positif supérieur à 1, et au plus n-1 premiers moyens de collecte et de distribution intermédiaire et au plus n-1 deuxièmes moyens de collecte et de distribution intermédiaire, n étant avantageusement égal au moins à quatre et de préférence égal à 6 et dans lequel chaque couche de liquide comporte un premier moyen de collecte et de distribution intermédiaire et un deuxième moyen de collecte et de distribution intermédiaire.

3. Réservoir selon la revendication 1 ou 2, comportant des capteurs de mesure de la température du fluide dans tout ou partie des couches liquides.

4. Réservoir selon l'une des revendications 1 à 3, dans lequel les éléments solides de stockage thermiques présentent au moins deux granulométries différentes.

5. Réservoir selon l'une des revendications 1 à 4, dans lequel la couche de liquide caloporteur (L1, L2, L3) a une épaisseur comprise entre 1 cm et 10 cm et/ou dans lequel l'enveloppe (2) est une virole et dans lequel la hauteur de chaque lit (G1, G2, G3) est inférieure au diamètre de l'enveloppe (2).

6. Installation comportant :
- au moins un réservoir de stockage selon l'une des revendications 1 à 5 en combinaison avec la revendication 2,
- au moins un système de production de fluide chaud,
- p systèmes utilisant le fluide chaud, p étant supérieur ou égal à 1 et inférieur ou égal à n,
- des moyens de connexion commandables entre le moyen supérieur de collecte et de distribution, une sortie d'évacuation du système de production de fluide chaud et les entrées d'alimentation des p systèmes utilisant le fluide chaud,
- des moyens de connexion commandables entre les n-1 premiers moyens de collecte et de distribution intermédiaires, la sortie d'évacuation du système de production de fluide chaud et les entrées d'alimentation des p systèmes utilisant le fluide chaud,
- des moyens de connexion commandables entre le moyen inférieur de collecte et de distribution et une entrée d'alimentation du système de production de fluide chaud et les sorties d'évacuation des p systèmes utilisant le fluide chaud,
- des moyens de connexion commandables entre les n-1 deuxièmes moyens de collecte et de distribution intermédiaire, l'entrée d'alimentation du système de production de fluide chaud et les sorties d'évacuation des p systèmes utilisant le fluide chaud.

7. Installation selon la revendication 6, dans laquelle les moyens de connexion commandables comportent des électrovannes et l'installation comportant une unité de contrôle desdites électrovannes, l'unité de contrôle étant avantageusement programmée pour contrôler les moyens de connexion en fonction des températures de fonctionnement des p systèmes d'utilisation et des températures des couches liquides.

8. Installation selon la revendication 7, dans laquelle l'unité de contrôle est programmée pour contrôler les moyens de connexion de telle sorte que la charge du réservoir est assurée par le moyen supérieur de collecte et de distribution et l'un au moins des n-1 premiers moyens de collecte et de distribution intermédiaires et l'alimentation d'au moins un système utilisateur est assurée par le moyen inférieur de collecte et de distribution et l'un au moins des n-1 deuxième moyen de collecte et de distribution intermédiaire situé en-dessous du premier moyen de collecte et de distribution commandé par l'unité de contrôle.

9. Installation selon l'une des revendications 7 ou 8, dans laquelle l'unité de contrôle est programmée pour contrôler les moyens de connexion de sorte à alimenter simultanément plusieurs systèmes utilisateurs.

10. Installation selon l'une des revendications 7 à 9, dans laquelle l'unité de contrôle est programmée pour contrôler au moins les moyens de connexion d'un premier moyen de collecte et de distribution intermédiaire et les moyens de connexion d'un deuxième moyen de collecte et de distribution intermédiaire situé directement au-dessus dudit premier moyen de collecte et de distribution et à réduire le volume de stockage actif du réservoir, avantageusement le réservoir comportant un fond supérieur bombé, le moyen supérieur de collecte et de distribution étant situé dans le fond bombé supérieur et, lorsqu'au moins un compartiment est isolé, l'unité de contrôle étant programmée pour contrôler les moyens de connexion du moyen supérieur de collecte et de distribution.

11. Installation selon l'une des revendications 6 à 10, dans laquelle le système de production du fluide chaud est un champ solaire, comportant avantageusement des récepteurs solaires de type Fresnel, et le ou les systèmes utilisateurs sont choisis au moins parmi un système de production d'électricité, un système de production d'eau chaude et un système de production de froid.

12. Installation selon la revendication 11 en combinaison avec la revendication 10, dans laquelle, lors d'une période d'ensoleillement moyen maximal, l'unité de contrôle est programmée pour contrôler les moyens de connexion de sorte qu'aucun compartiment ne soit isolé, en période d'ensoleillement moyen minimal plusieurs compartiments soient isolés, et en période d'ensoleillement moyen intermédiaire au moins un compartiment soit isolé.

13. Procédé de gestion d'une installation selon l'une des revendications 6 à 12, comportant les étapes :
- connaissance des températures des couches de liquide,
- connaissance des gammes de température de fonctionnement des q systèmes utilisateurs,
- contrôle des moyens de connexion de sorte à ce que chaque système utilisateur soit alimenté par un fluide dont la température est proche ou est contenue dans la gamme de température de fonctionnement du système utilisateur.

14. Procédé de gestion selon la revendication 13 comportant les étapes :
- détection d'une demande de débit de fluide important,
- contrôle des moyens de connexion de sorte que le moyen supérieur de collecte et de distribution et au moins une partie des deuxièmes moyens de collecte et de distribution intermédiaires assurent la fourniture du fluide.

15. Procédé de gestion selon l'une des revendications 13 ou 14 en combinaison avec la revendication 11, comportant les étapes :
- connaissance des ensoleillements moyens des différentes périodes d'une année, par exemple des saisons,
- contrôle des moyens de connexion pour adapter le volume de fluide actif participant au stockage en fonction de l'ensoleillement moyen.

## Patentansprüche

1. Wärmespeichertank, umfassend ein Gehäuse (2) mit einer Längsachse (X), wobei die Längsachse im Wesentlichen vertikal ausgerichtet sein soll, wobei das Gehäuse mit einer Wärmeübertragungsflüssigkeit und festen Wärmespeicherelementen gefüllt ist, ein oberes Längsende, das mit einem oberen Mittel (DS) zum Sammeln und Zuführen einer Flüssigkeit auf einer ersten Temperatur versehen ist, und ein zweites, unteres Längsende, das mit einem unteren Mittel (DI) zum Sammeln und Zuführen einer Flüssigkeit auf einer zweiten Temperatur versehen ist, wobei die festen Wärmespeicherelemente auf mindestens zwei entlang der Längsachse (X) übereinander gelagerte Betten (TH1, TH2, TH3), die durch eine Flüssigkeitsschicht (L1, L2, L3) getrennt sind, verteilt sind, wobei die Flüssigkeit zwischen dem oberen Längsende und dem unteren Längsende zirkulieren kann, **dadurch gekennzeichnet, dass** er mindestens ein erstes Zwischensammel-
und -verteilmittel, das in der Flüssigkeitsschicht angeordnet ist, und mindestens ein zweites Zwischensammel- und -verteilmittel, das teilweise oder vollständig in der Flüssigkeitsschicht oder knapp über oder knapp unter der Flüssigkeitsschicht angeordnet ist, umfasst, dass das erste Zwischensammel- und -verteilmittel dazu ausgerichtet ist, das Fluid in dem Bett von festen Elementen, das sich über dem ersten Zwischensammel- und -verteilmittel befindet, zu sammeln und zu verteilen, und dass das zweite Zwischensammel- und -verteilmittel dazu ausgerichtet ist, das Fluid in dem Bett von festen Elementen, das sich unter dem zweiten Zwischensammel- und -verteilmittel befindet, zu sammeln und zu verteilen.

2. Tank nach Anspruch 1, umfassend n Betten von festen Elementen, die durch n-1 Flüssigkeitsschichten getrennt sind, wobei n eine positive ganze Zahl über 1 ist, und höchstens n-1 erste Zwischensammel- und -verteilmittel und höchstens n-1 zweite Zwischensammel- und -verteilmittel, wobei n vorteilhafterweise gleich mindestens 4 oder vorzugsweise gleich 6 ist und wobei jede Flüssigkeitsschicht ein erstes Zwischensammel- und -verteilmittel und ein zweites Zwischensammel- und -verteilmittel umfasst.

3. Tank nach Anspruch 1 oder 2, umfassend Sensoren zur Messung der Temperatur des Fluids in allen oder einem Teil der Flüssigkeitsschichten.

4. Tank nach einem der Ansprüche 1 bis 3, wobei die festen Wärmespeicherelemente mindestens zwei verschiedene Korngrößen aufweisen.

5. Tank nach einem der Ansprüche 1 bis 4, wobei die Wärmeübertragungsflüssigkeitsschicht (L1, L2, L3) eine Dicke zwischen 1 cm und 10 cm aufweist und/oder wobei das Gehäuse (2) ein Mantel ist und wobei die Höhe jedes Betts (G1, G2, G3) kleiner als der Durchmesser des Gehäuses (2) ist.

6. Anlage, umfassend:
- mindestens einen Speichertank nach einem der Ansprüche 1 bis 5 in Kombination mit Anspruch 2,
- mindestens ein System zur Erzeugung eines warmen Fluids,
- p Systeme, die das warme Fluid verwenden, wobei p größer gleich 1 und kleiner gleich n ist,
- Verbindungsmittel, die zwischen dem oberen Sammel- und Verteilmittel, einem Abführauslass des Systems zur Erzeugung eines warmen Fluids und den Zuführungseinlässen der das warme Fluid verwendenden p Systeme steuerbar sind,
- Verbindungsmittel, die zwischen den n-1 ersten Zwischensammel- und -verteilmitteln, dem Abführauslass des Systems zur Erzeugung eines warmen Fluids und den Zuführungseinlässen der das warme Fluid verwendenden p Systeme steuerbar sind,
- Verbindungsmittel, die zwischen dem unteren Sammel- und Verteilmittel und einem Zuführungseinlass des Systems zur Erzeugung eines warmen Fluids und den Abführauslässen der das warme Fluid verwendenden p Systeme steuerbar sind,
- Verbindungsmittel, die zwischen den n-1 zweiten Zwischensammel- und -verteilmitteln, dem Zuführungseinlass des Systems zur Erzeugung eines warmen Fluids und den Abführauslässen der das warme Fluid verwendenden p Systeme steuerbar sind.

7. Anlage nach Anspruch 6, wobei die steuerbaren Verbindungsmittel Elektroventile umfassen und die Anlage eine Einheit zum Steuern der Elektroventile umfasst, wobei die Steuereinheit vorteilhafterweise zum Steuern der Verbindungsmittel in Abhängigkeit von den Betriebstemperaturen der p Verwendungssysteme und der Temperaturen der Flüssigkeitsschichten programmiert ist.

8. Anlage nach Anspruch 7, wobei die Steuereinheit zum Steuern der Verbindungsmittel derart, dass die Tankladung durch das obere Sammel- und Verteilmittel und mindestens eines der n-1 ersten Zwischensammel- und -verteilmittel gewährleistet wird und die Versorgung mindestens eines Benutzersystems durch das untere Sammel- und Verteilmittel und mindestens eines der n-1 zweiten Zwischensammel- und -verteilmittel, das sich unter dem durch die Steuereinheit gesteuerten ersten Sammel- und Verteilmittel befindet, gewährleistet wird, programmiert ist.

9. Anlage nach einem der Ansprüche 7 oder 8, wobei die Steuereinheit zum Steuern der Verbindungsmittel derart, dass mehrere Benutzersysteme gleichzeitig versorgt werden, programmiert ist.

10. Anlage nach einem der Ansprüche 7 bis 9, wobei die Steuereinheit zum Steuern mindestens der Verbindungsmittel eines ersten Zwischensammel- und -verteilmittels und der Verbindungsmittel eines zweiten Zwischensammel- und -verteilmittels, das sich direkt über dem ersten Sammel- und Verteilmittel befindet, und zum Reduzieren des aktiven Speichervolumens des Tanks programmiert ist, wobei der Tank vorteilhafterweise einen oberen gewölbten Boden umfasst, wobei sich das obere Sammel- und Verteilmittel in dem oberen gewölbten Boden befindet und die Steuereinheit dazu programmiert ist, die Verbindungsmittel des oberen Sammel- und Verteilmittels zu steuern, wenn mindestens eine Kammer isoliert ist.

11. Anlage nach einem der Ansprüche 6 bis 10, wobei das System zur Erzeugung eines warmen Fluids ein Solarfeld ist, das vorteilhafterweise Fresnel-Solarempfänger umfasst, und das oder die Benutzersysteme mindestens aus einem System zur Erzeugung von Elektrizität, einem System zur Erzeugung von warmem Wasser und einem System zur Erzeugung von Kälte ausgewählt ist/sind.

12. Anlage nach Anspruch 11 in Kombination mit Anspruch 10, wobei die Steuereinheit dazu programmiert ist, die Verbindungsmittel so zu steuern, dass bei einer maximalen mittleren Sonneneinstrahlungsperiode keine Kammer isoliert ist, bei einer minimalen mittleren Sonneneinstrahlungsperiode mehrere Kammern isoliert sind und bei einer mittleren Zwischensonneneinstrahlungsperiode mindestens eine Kammer isoliert ist.

13. Verfahren zum Betrieb einer Anlage nach einem der Ansprüche 6 bis 12, das die folgenden Schritte umfasst:
- Erhalten der Temperaturen der Flüssigkeitsschichten,
- Erhalten der Betriebstemperaturbereiche der q Benutzersysteme,
- Steuern der Verbindungsmittel derart, dass jedes Benutzersystem durch ein Fluid versorgt wird, dessen Temperatur nahe dem Betriebstemperaturbereich des Benutzersystems ist oder darin enthalten ist.

14. Betriebsverfahren nach Anspruch 13, das die folgenden Schritte umfasst:
- Detektieren einer großen Fluidstromanforderung,
- Steuern der Verbindungsmittel derart, dass das obere Sammel- und Verteilmittel und mindestens ein Teil der zweiten Zwischensammel- und -verteilmittel die Lieferung des Fluids gewährleisten.

15. Betriebsverfahren nach einem der Ansprüche 13 oder 14, in Kombination mit Anspruch 11, das die folgenden Schritte umfasst:
- Erhalten der mittleren Sonneneinstrahlungen verschiedener Perioden eines Jahres, zum Beispiel Jahreszeiten,
- Steuern der Verbindungsmittel zum Anpassen des am Speichern teilnehmenden aktiven Fluidvolumens in Abhängigkeit von der mittleren Sonneneinstrahlung.

## Claims

1. Heat storage tank comprising an envelope (2) with a longitudinal axis (X), the longitudinal axis being intended to be oriented substantially vertically, said envelope being filled with a heat transfer liquid and solid heat storage elements, an upper longitudinal end fitted with an upper means for collecting and supplying (DS) a liquid at a first temperature and a second lower longitudinal end provided with lower means for collecting and supplying (DI) a liquid at a second temperature, said solid heat storage elements being distributed across at least two beds (TH1, TH2, TH3) superposed along the longitudinal axis (X), separated by a layer of liquid (L1, L2, L3), the liquid being capable of flowing between the upper longitudinal end and the lower longitudinal end **characterised in that** it comprises at least one first intermediate means of collecting and distributing arranged in the liquid layer and at least one second intermediate means for collecting and distributing arranged in the layer of liquid or immediately above or immediately below the layer of liquid partially or entirely, **in that** the first intermediate means of collecting and distributing is oriented in such a way as to collect and distribute the fluid in the bed of solid elements located above the first intermediate means of collecting and distributing and **in that** the second intermediate means for collecting and distributing is oriented in such a way as to collect and distribute the fluid in the bed of solid elements located below the second intermediate means for collecting and distributing.

2. Tank according to claim 1, comprising n beds of solid elements separated by n-1 liquid layers, n being a positive integer greater than 1, and at most n-1 first intermediate means for collecting and distributing and at most n-1 second intermediate means for collecting and distributing, n being advantageously equal to at least four and preferably equal to 6 and wherein each layer of liquid comprises a first intermediate means of collecting and distributing and a second intermediate means for collecting and distributing.

3. Tank according to claim 1 or 2, comprising sensors for measuring the temperature of the fluid in all or a portion of the liquid layers.

4. Tank according to one of claims 1 to 3, wherein the solid heat storage elements have at least two different grain sizes.

5. Tank according to one of claims 1 to 4, wherein the layer of heat transfer liquid (L1, L2, L3) has a thickness between 1 cm and 10 cm and/or wherein the envelope (2) is a ferrule and wherein the height of each bed (G1, G2, G3) is less than the diameter of the envelope (2).

6. Installation comprising:
- at least one storage tank according to one of claims 1 to 5 in combination with claim 2,
- at least one system for producing hot fluid,
- p systems using the hot fluid, p being greater than or equal to 1 and less than or equal to n,
- means of connection that can be controlled between the upper means for collecting and distributing, an evacuation outlet of the system for producing hot fluid and the supply inlets of the p systems using the hot fluid,
- means of connection that can be controlled between the n-1 first intermediate means for collecting and distributing, the evacuation outlet of the system for producing hot fluid and the supply inlets of the p systems using the hot fluid,
- means of connection that can be controlled between the lower means for collecting and distributing and a supply inlet of the system for producing hot fluid and the evacuation outlets of the p systems using the hot fluid,
- means of connection that can be controlled between the n-1 second intermediate means for collecting and distributing, the supply inlet of the system for producing hot fluid and the evacuation outlets of the p systems using the hot fluid.

7. Installation according to claim 6, wherein the means of connection that can be controlled comprise solenoid valves and the installation comprising a unit for controlling said solenoid valves, the control unit being advantageously programmed to control the means of connection according to the operating temperatures of the p systems for use and the temperatures of the liquid layers.

8. Installation according to claim 7, wherein the control unit is programmed to control the means for connection in such a way that the charge of the tank is provided by the upper means for collecting and distributing and at least one of the n-1 first intermediate means for collecting and distributing and the supplying of at least one user system is provided by the lower means for collecting and distributing and at least one of the n-1 second intermediate means for collecting and distributing located below the first means for collecting and distributing controlled by the control unit.

9. Installation according to claim 7 or 8, wherein the control unit is programmed to control the means for connection in such a way as to simultaneously supply several user systems.

10. Installation according to one of claims 7 to 9, wherein the control unit is programmed to control at least the means for connection of a first intermediate means of collecting and distributing and the means for connection of a second intermediate means for collecting and distributing located directly above said first means for collecting and distributing and to reduce the active storage volume of the tank, the tank advantageously comprising an upper convex bottom, the upper means for collecting and distributing being located in the upper convex bottom, and , when at least one compartment is isolated, the control unit being programmed to control the means for connection of the upper means for collecting and distributing.

11. Installation according to one of claims 6 to 10, wherein the system for producing hot fluid is a solar field, advantageously comprising solar receivers of the Fresnel type, and the user system or systems are chosen at least from a system for producing electricity, a system for producing hot water and a system for producing cold.

12. Installation according to claim 11 in combination with 10, wherein, during a maximum average period of sunshine, the control unit is programmed to control the means for connection in such a way that no compartment is isolated, in the minimum average period of sunshine several compartments are isolated, and in the intermediate average period of sunshine at least one compartment is isolated.

13. Method for managing an installation according to one of claims 6 to 12, comprising the steps:
- knowledge of the temperatures of the layers of liquid,
- knowledge of the operating temperature ranges of the q user systems,
- controlling the means of connection in such a way that each user system is supplied by a fluid of which the temperature is close to or is contained within the operating temperature range of the user system.

14. Method for managing according to claim 13 comprising the steps:
- detecting a substantial fluid flow rate demand,
- controlling the means of connection in such a way that the upper means for collecting and distributing and at least one portion of the second intermediate means for collecting and distributing ensure the supply of fluid.

15. Method for managing according to one of claims 13 or 14 in combination with claim 11, comprising the steps:
- knowledge of the average sunshine of the different periods of a year, for example seasons,
- controlling the means of connection in order to adapt the volume of active fluid participating in the storage according to the average period of sunshine.
